# EUROPÄISCHE PATENTSCHRIFT

(11) **EP 2 510 224 B1**
(45) Veröffentlichungstag und Bekanntmachung des Hinweises auf die Patenterteilung: **29.04.2015**
(21) Anmeldenummer: 10797994.0
(22) Anmeldetag: 02.12.2010
(51) Int. Cl.: F03B 3/12

(54) **TURBINENBLATT FÜR EINE BIDIREKTIONAL ANSTRÖMBARE WASSERTURBINE**
TURBINE BLADE FOR A WATER TURBINE WITH BI-DIRECTIONAL FLOW
AUBE DE TURBINE POUR UNE TURBINE À EAU POUVANT ÊTRE ALIMENTÉE DE MANIÈRE BIDIRECTIONNELLE

(30) Priorität: 09.12.2009 DE 102009057449
(43) Veröffentlichungstag der Anmeldung: 17.10.2012
(73) Patentinhaber: Voith Patent GmbH, 89522 Heidenheim (DE)
(72) Erfinder: ARLITT, Raphael, 89077 Ulm (DE); BISKUP, Frank, 73527 Schwäbisch Gmünd (DE)
(74) Vertreter: Dr. Weitzel & Partner
(86) Internationale Anmeldenummer: PCT/EP2010/007307
(87) Internationale Veröffentlichungsnummer: WO 2011/069615

(56) Entgegenhaltungen:
- WO-A1-2009/143846
- DE-A1-102007 021 213
- DE-B- 1 187 559
- US-A1- 2007 231 148

## Beschreibung

Die Erfindung betrifft ein bidirektional anströmbares Turbinenblatt, für eine Wasserturbine, die bevorzugt in einer tauchenden Energieerzeugungsanlage für die Energiegewinnung aus einer bidirektionalen Wasserströmung verwendet wird.

Zur Energiegewinnung aus einer richtungsvariablen Strömung, beispielsweise einer Gezeitenströmung, mittels einer freistehenden, propellerförmig gestalteten Turbine wird üblicherweise ein Nachführmechanismus verwendet, der eine Gondel mit der daran angebrachten Turbine in die Strömung dreht. Liegen im Wesentlichen zwei entgegengesetzt gerichtete Haupanströmungsrichtungen, wie bei Ebbe und Flut in einer Gezeitenströmung, vor, so kann eine solche Richtungsnachführung durch eine Klapp- oder Drehvorrichtung realisiert werden, die die Gondel von einer ersten in eine zweite Stellung schwenkt. Nachteilig ist jedoch, dass für einen derartigen Nachführmechanismus massive Dreh- oder Klappscharniersysteme verwendet werden müssen. Darüber hinaus ist für den Fall, dass die Wasserturbine einen elektrischen Generator antreibt, eine Vorrichtung vorzusehen, die ein Verdrillen des vom elektrischen Generator ausgehenden Leistungskabels verhindert.

Zur Umgehung dieser Problematik kann anstatt einer Gesamtnachführung der Wasserturbine mittels einer Pitch-Verstelleinrichtung, die eine Drehung der Turbinenblätter um 180° an der Nabe realisiert, eine Vorrichtung zur bidirektionalen Anströmung geschaffen werden. Allerdings ist auch eine solche Ausgestaltung mit Nachteilen verbunden, da für eine propellerförmige Turbine mit radial nach außen gerichteten Turbinenblättern typischerweise wenigstens für eine Anströmungsrichtung die Haltestrukturen der Gondel luvseitig liegen, sodass ein den Wirkungsgrad reduzierendes Strömungshindernis vorliegt. Darüber hinaus ist ein Pitch-Verstellungsmechanismus konstruktiv aufwendig und für tauchende Energieerzeugungsanlagen zur Entnahme von Energie aus einer Meeresströmung im Hinblick auf die Notwendigkeit zur Wartung von Nachteil.

Als weitere Alternative zur Schaffung einer bidirektional anströmbaren Wasserturbine wurde in der WO 2006/125959 A1 vorgeschlagen, als Profilkontur für die Turbinenblätter einer rotorförmigen Wasserturbine ein doppelt symmetrisches Profil zu wählen. Dabei stellt eine erste Symmetrieachse die Sehnenlinie dar. Zusätzlich ist das Profil zu einer Mittenlinie symmetrisch, die als Lotrechte auf der Profilsehne bei 50 % der Sehnenlänge definiert ist. Als Folge ergibt sich ein linsenförmiges Profil, das für eine bidirektionale Anströmung jeweils identische Profilkonturen sicherstellt. Nachteilig ist jedoch, dass aufgrund der doppelt gewählten Symmetrie für die Profilkontur im Vergleich zu einem einseitig angeströmten, gewölbten Profil ein geringerer Wirkungsgrad resultiert. Ferner ergeben sich Nachteile aufgrund abstromseitiger Strömungsablösungen und einem erhöhten Strömungswiderstand der Turbinenblätter.

Ferner sind aus der Druckschrift US 2007/0231148 A1 punktsymmetrische Profile mit einer Wölbung bekannt. Diese zeichnen sich durch einen Symmetriepunkt aus, der bei halber Profiltiefe auf der Profilsehne liegt, sodass die punktsymmetrisch gestaltete Skelettlinie einen S-Schlag vollzieht. Die Dickenverteilung des Profils ist symmetrisch zur Mittenlinie gewählt. Dabei verbessert das S-Schlag-förmige Profil die Leistungsbeiwerte und verringert die Schubbeiwerte.

Der Erfindung liegt die Aufgabe zugrunde, ein Turbinenblatt so zu gestalten, dass eine bidirektionale Anströmung möglich ist. Dieses Turbinenblatt soll dazu geeignet sein, für eine propellerförmige Turbine einer tauchenden Energieerzeugungsanlage verwendet zu werden, wobei sich das Turbinenblatt durch einen hohen Wirkungsgrad und geringe Längsverwindung für eine Anströmung aus beiden Richtungen auszeichnen soll.

Die Erfindung baut auf den bekannten punktsymmetrischen Profilen mit einer S-Schlag-förmigen Skelettlinie und einer zur Mittenlinie des Profils symmetrischen Dickenverteilung auf. Dieses Profil wird nunmehr derart weitergestaltet, dass eine Überströmvorrichtung von einer ersten Profilseite zu einer zweiten Profilseite gegeben ist.

Aufgrund der punktsymmetrischen Profilform besteht für S-Schlag-Profile die Gefahr einer Strömungsablösung auf den abstromseitigen Profilteilen. Ferner wirken starke Torsionskräfte auf ein Turbinenblatt mit einem solchen Profil. Durch ein Überströmen von der der ersten zur zweiten Profilseite im Mittelteil und/oder dem abstromseitigen Bereich des Profils besteht die Möglichkeit, die Tendenz zu Strömungsablösungen zu verringern und aufgrund der verringerten Torsionskräfte die Turbinenblattaussteifung gegen ein Verdrillen konstruktiv zu vereinfachen.

Des Weiteren kann das Turbinenblattprofil im Wesentlichen an die strömungstechnischen Gegebenheiten angepasst werden, ohne konkurrierenden strukturmechanischen Anforderungen bei der Konstruktion des Turbinenblatts folgen zu müssen. Dabei können insbesondere langgestreckte, schlanke Profile verwendet werden, die zu einer hohen Gleitzahl führen. Ferner müssen die Befestigungen des Turbinenblatts an der Nabe der umlaufenden Einheit verringerte Drehmomente aufnehmen und können entsprechend konstruktiv und fertigungstechnisch vereinfacht werden.

Gemäß der vorliegenden Erfindung umfasst die Überströmvorrichtung eine Vielzahl von Überströmkanälen, deren Orientierung an die bidirektionale Anströmungsrichtung angepasst ist. Für eine weitere Ausführungsvariante, die alternativ oder zusätzlich zu den Überströmkanälen anwendbar ist, wird die Überströmvorrichtung durch ein geteiltes Blattprofil gebildet. Hierbei liegt im Mittelbereich des Gesamtprofils wenigstens ein Teilabschnitt vor, für den die Dickenverteilung entlang der S-Schlag-förmigen Skelettlinie den Wert Null annimmt.

Die Überströmvorrichtung der Erfindung umfasst Überströmkanäle, die in Abhängigkeit der Anströmungsrichtung verschließbar sind. Damit können Überströmkanäle auch außerhalb des Mittelbereichs des Profils angeordnet werden. Das Verschließen der Überströmkanäle kann passiv oder aktiv bewirkt werden. Für eine passive Ausführung besteht bevorzugt eine Kopplung von Kanalverschlusselementen in den Überströmkanälen mit elastischen Profilelementen, die entlang der von der Strömung überstrichenen Außenseite des Profils angeordnet sind und durch die Strömungskräfte deformiert werden. Wird in den elastischen Profilelementen ein hydraulisches oder pneumatisches Arbeitsmedium aufgenommen, können so Druckkräfte zur Aktorik der Kanalverschlusselemente generiert und gleichzeitig ein adaptives Profil geschaffen werden.

Für eine Weitergestaltung kann die Überströmvorrichtung adaptive Wandungselemente umfassen, die in Abhängigkeit der Anströmungsrichtung von einer ersten in eine zweite Stellung wechseln und so Abweichungen zur Punktsymmetrie des Profils bewirken. Hierdurch kann ein gezieltes Überströmen zum hinteren, abstromseitigen Bereich des Profils bewirkt werden, ohne dass ein gravierender Wirkungsgradverlust auftritt. Dabei können die adaptiven Wandungselemente durch eine zugeordnete Aktorik entweder aktiv verstellt werden oder diese sind als passive, elastische Komponenten ausgebildet, deren Kontur sich mit der Anströmung ändert.

Nachfolgend wird die Erfindung anhand von Ausführungsbeispielen in Verbindung mit den Figurendarstellungen genauer erläutert, in denen im Einzelnen Folgendes dargestellt ist:
- Figur 1a: zeigt einen Profilschnitt entlang der Linie A-A aus Figur 1b für ein punktsymmetrisches Profil mit einer Überströmvorrichtung von der ersten zur zweiten Profilseite.
- Figur 1b: zeigt einen Teilabschnitt eines Turbinenblatts in Draufsicht für das Profil aus Figur 1 a mit einer im Mittelbereich des Profils angelegten Überströmvorrichtung mit begrenzter Erstreckung in Längsrichtung des Turbinenblatts.
- Figur 2a: zeigt als Profilschnitt ein alternatives Ausführungsbeispiel welches nicht Teil der Erfindung ist, mit einer Vielzahl von Überströmkanälen.
- Figur 2b: zeigt eine Draufsicht auf einen Teilabschnitt eines Turbinenblatts mit einem Profil gemäß Figur 2a.
- Figur 3a: zeigt einen erfindungsgemäßen Profilschnitt mit außermittig angelegten, passiv ansteuerbaren Überströmkanälen.
- Figur 3b: zeigt eine Draufsicht auf einen Teilabschnitt eines Turbinenblatts mit einem Profil gemäß Figur 3a.
- Figuren 4a und 4b: zeigen eine Weitergestaltung welche nicht Teil der Erfindung ist, mit einer paarweisen und punktsymmetrischen Anordnung elastischer Elemente zur Profilbeeinflussung in der Überströmvorrichtung von der ersten Profilseite zur zweiten Profilseite.
- Figuren 5a und 5b: zeigen aktive, adaptive Wandungselemente in der Überströmvorrichtung in unterschiedlichen Stellungen für die erste und die zweite Anströmungsrichtung.
- Figur 6: zeigt ein dem Stand der Technik entsprechendes punktsymmetrisches, gewölbtes Profil zur Ausbildung eines bidirektional anströmbaren Turbinenblatts.

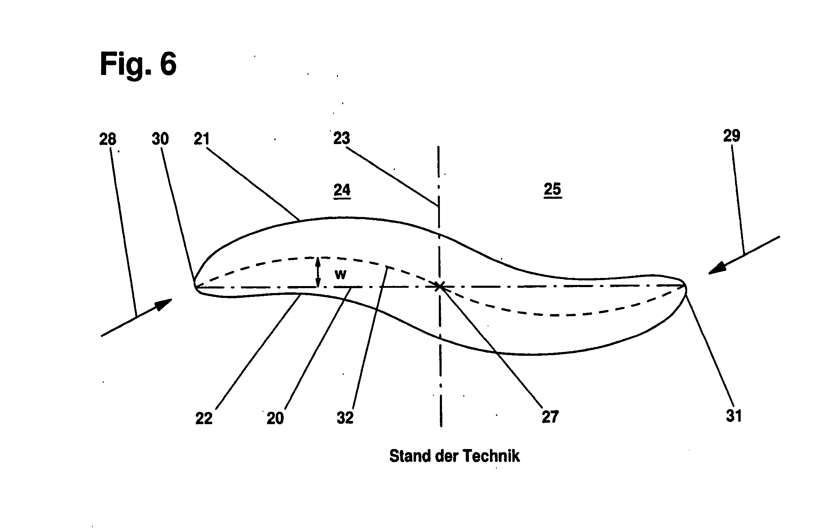

Zur Darlegung der im Folgenden verwendeten Begrifflichkeit wird zunächst ein dem Stand der Technik entsprechender, in Figur 6 dargestellter Profilschnitt betrachtet. Gezeigt ist ein Profil, das punktsymmetrisch zum Symmetriepunkt 27 ausgebildet ist. Dabei ist der Symmetriepunkt 27 bei halber Profiltiefe auf der Profilsehne 20 angeordnet und liegt demnach deckungsgleich zum Schnittpunkt der Profilsehne 20 mit der Mittenlinie 23, wobei letztere als senkrecht zur Profilsehne 20 verlaufend definiert ist.

Für das dargestellte S-Schlag-förmige Profil weist die zum Symmetriepunkt 27 punktsymmetrisch angelegte Skelettlinie 32 eine Wölbung w auf. Des Weiteren führt die voranstehend genannte Symmetriebedingung zu einer bezüglich der Mittenlinie 23 symmetrisch angelegten Profildickenverteilung. Andere Ausführungsformen für bidirektional anströmbare, punktsymmetrische Profile sind denkbar (nicht dargestellt), etwa eine Skelettlinie mit wenigstens einem abschnittsweise linearen Verlauf im mittleren Profilabschnitt und punktsymmetrisch zueinander gestalteten Profilnasen 30, 31.

Für die nachfolgende Darlegung wird begrifflich von einer Teilung des Profils durch die Skelettlinie 32 ausgegangen, die zu einer ersten Profilseite 21 und einer zweiten Profilseite 22 führt. Des Weiteren soll durch die Mittenlinie 23 eine Aufteilung des Profils in eine erste Profilhälfte 24 und eine zweite Profilhälfte 25 gegeben sein. Dabei reicht die erste Profilhälfte 24 von der ersten Profilnase 30 bis zur Mittenlinie 23 und die zweite Profilhälfte 25 entsprechend von der Mittenlinie 23 bis zur zweiten Profilnase 31.

Ferner entsteht für die skizzierte erste Anströmungsrichtung 28, wobei von einer effektiven Anströmung ausgegangen wird, wenigstens in der ersten Profilhälfte 24 auf der ersten Profilseite 21 eine Saugwirkung und auf der zweiten Profilseite 22 eine Druckwirkung. Allerdings kann aufgrund des S-Schlags im Bereich der abstromseitigen Kante der zweiten Profilhälfte 25 auf der ersten Profilseite 21, d.h. in der Nähe zweiten Profilnase 31, für die betrachtete erste Anströmungsrichtung 28 ein Druckbauch entstehen, der die Effizienz des Profils verringert und die auf das S-Schlagprofil wirkenden Torsionskräfte weiter erhöht. Für die zweite Anströmungsrichtung 29 ist die druck- und saugseitige Zuordnung entsprechend am Symmetriepunkt 27 gespiegelt.

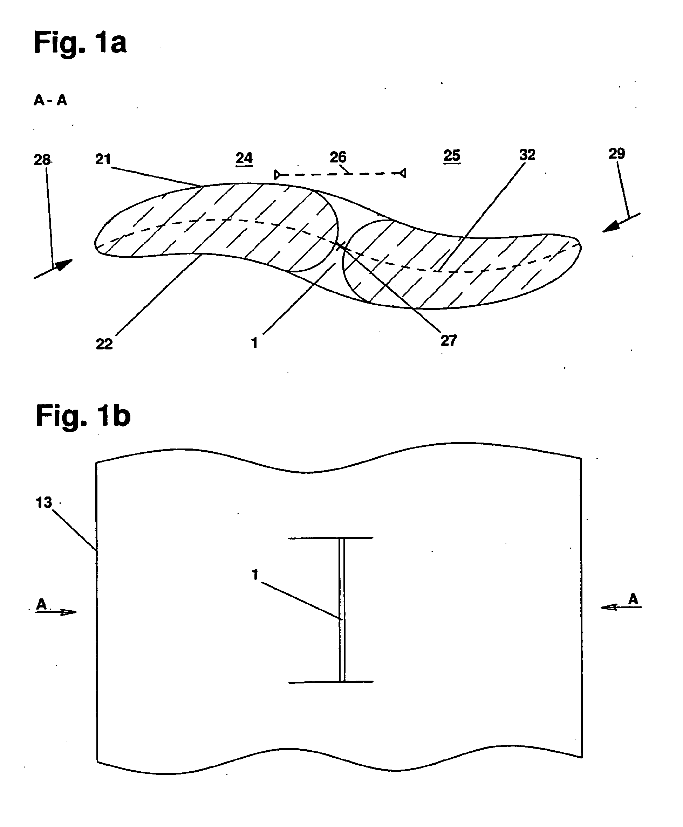

Für das in Figur 1 a als Profilschnitt dargestellte Profil liegt eine zum Symmetriepunkt 27 punktsymmetrisch angelegte Überströmvorrichtung 1 vor. Für das dargestellt Ausgestaltungsbeispiel durchbricht die Überströmvorrichtung 1 das Profil in einem Mittelbereich 26, der als jener Profilteil definiert ist, der von 3/8 bis zu 5/8 der Profiltiefe reicht.

Die Überströmvorrichtung 1 kann gemäß einer ersten Ausgestaltung längs über das gesamte Turbinenblatt 13 reichen, sodass ein über die gesamte Längserstreckung geteiltes Profil vorliegt. Gemäß einer alternativen, vorliegend dargestellten Ausgestaltung erstreckt sich die Überströmvorrichtung 1 über einen begrenzten Abschnitt der Längserstreckung des Turbinenblatts 13. Diese Ausführung ist in Figur 1b skizziert, die eine Draufsicht auf das Turbinenblatt 13 mit dem in Figur 1a gezeigten erfindungsgemäßen Profil darstellt. Dabei können längs des Turbinenblatts 13 mehrere Überströmvorrichtungen 1 vorgesehen sein, die jeweils durch die Strukturstabilität verbessernde Querstege voneinander getrennt sind. Dies ist im Einzelnen nicht in den Figuren dargestellt.

Die Wirkung einer Überströmvorrichtung 1 für ein punktsymmetrisches, bidirektional angeströmtes S-Schlagprofil ist folgende: Die wesentliche Auftriebswirkung wird für die erste Anströmungsrichtung 28 durch den vorderen Profilteil, d.h. der ersten Profilhälfte 24, bewirkt. Entsprechend ergibt sich für eine entgegengesetzte Anströmungsrichtung, d.h. in Richtung der zweiten Anströmungsrichtung 29, die wesentliche Wirkung des Profils durch die zweite Profilhälfte 25, die dann stromaufwärts liegt. Durch die Überströmvorrichtung 1 wird ein Überströmen von der Druckseite zum abstromseitigen Bereich der gegenüberliegenden Profilseite bewirkt. Demnach wird für die erste Anströmungsrichtung 28 ein Teil der Profilumströmung entlang der ersten Profilhälfte 24 auf der zweiten Profilseite 22 über die Überströmvorrichtung 1 zur zweiten Profilhälfte 25 der ersten Profilseite 21 geführt und verringert dort die Gefahr von Strömungsablösungen zum einen und das Torsionsmoment auf das Turbinenblatt 13 zum anderen.

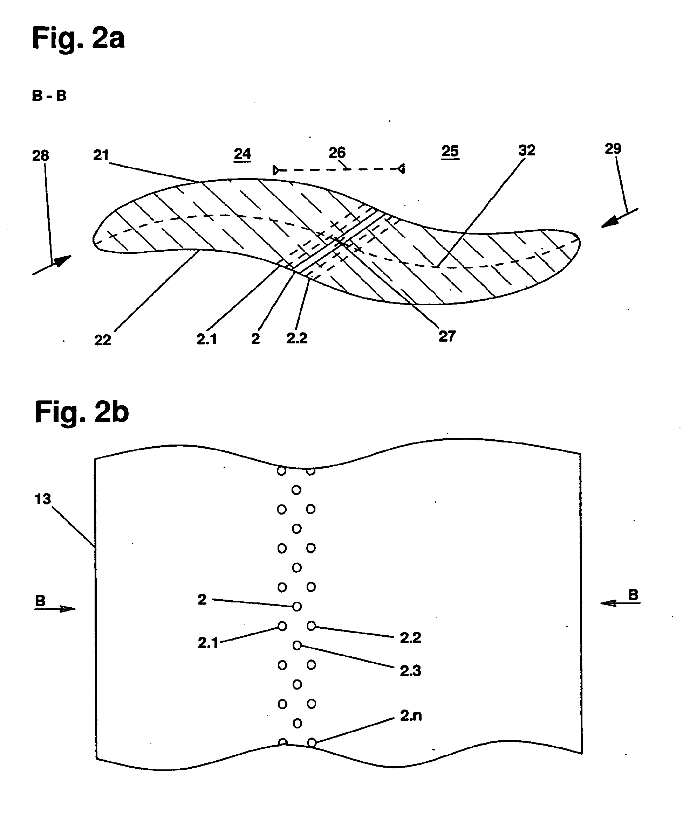

Aus dem in Figur 2a dargestellten Profilschnitt entlang der Schnittlinie B-B aus Figur 2b ist ein weiteres Ausgestaltungsbeispiel, welches nicht Teil der Erfindung ist, der Erfindung ersichtlich. Dargestellt ist eine Vielzahl von Überströmkanälen 2, 2.1, 2.2, ..., 2.n zur Ausbildung der Überströmungsöffnung 1. Gemäß Figur 2b sind die einzelnen Überströmkanäle 2, 2.1, 2.2, ..., 2.n über die Längserstreckung des Turbinenblatts 13 parallel und versetzt zueinander angeordnet. Dabei sind auch Ausgestaltungen denkbar, für die benachbarte Kanäle in einer Winkelstellung orientiert oder mit Verzweigungen versehen sind. Außerdem können die Querschnitte der Überströmkanäle 2, 2.1, 2.2, ..., 2.n verändert werden. Bevorzugt wird eine Ausführungsalternative mit schlitzförmigen Überströmkanälen 2, 2.1, 2.2, ..., 2.n. Derartige Ausführungsformen sind im Einzelnen nicht in den Figuren dargestellt.

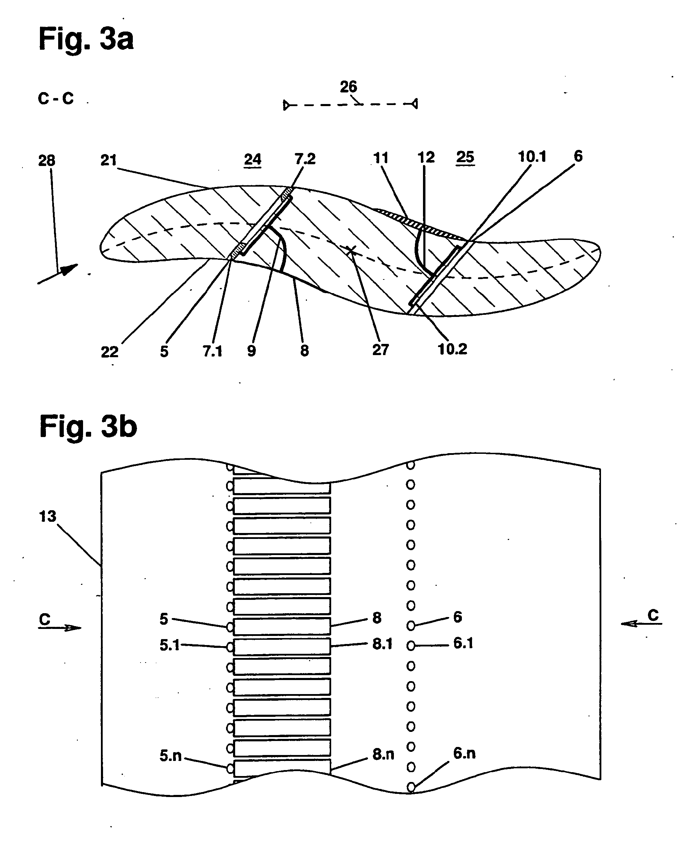

In den Figuren 3a und 3b ist eine Ausgestaltung der Erfindung dargestellt. Der Profilschnitt C-C in Figur 3a zeigt einen ersten außermittigen Strömungskanal 5 und einen zweiten außermittigen Strömungskanal 6, die wenigstens über Teile ihrer Erstreckung außerhalb des Mittelbereichs 26 angeordnet sind. Zum Verschluss des ersten außermittigen Überströmkanals 5 sind die ersten Kanalverschlusselemente 7.1 und 7.2 vorgesehen. Für die skizzierte erste Anströmungsrichtung 28 sind diese geschlossen, sodass durch den ersten außermittigen Überströmkanal 5 und damit im Bereich der ersten Profilhälfte 24 kein Überströmen von der ersten Profilseite 21 zur zweiten Profilseite 22 auftritt. Anders liegt der Fall für den zweiten außermittigen Überströmkanal 6. Hier sind für die gezeigte erste Anströmungsrichtung 28 die zugeordneten zweiten Kanalverschlusselemente 10.1, 10.2 geöffnet, sodass in der zweiten Profilhälfte das erwünschte Überströmen von der ersten Profilseite 21 zur zweiten Profilseite 22 resultiert.

Für die dargestellte Ausgestaltung wird eine passive Ansteuerung der ersten und zweiten Kanalverschlusselemente 7.1, 7.2, 10.1, 10.2 bewirkt. Dabei wird ein erstes elastisches Profilelement 8, das ein druckaufnehmendes Arbeitsmedium umfasst, für die gezeigte erste Anströmungsrichtung 28 komprimiert, wobei eine Verbindung zwischen den ersten Kanalverschlusselementen 7.1, 7.2 und dem ersten elastischen Profilelement 8 über den ersten Kopplungskanal 9 gegeben ist. Entsprechend führt eine Komprimierung des ersten elastischen Profilelements 8 aufgrund dessen druckseitiger Lage für die erste Anströmungsrichtung 28 zu einem Entfalten der balgförmig angelegten ersten Kanalverschlusselemente 7.1, 7.2 und damit zu der voranstehend genannten Strömungsunterbrechung im ersten außermittigen Überströmkanal 5. Anders liegt der Fall für das zweite elastische Profilelement 11, das relativ zum Symmetriepunkt 27 punktsymmetrisch zum ersten elastischen Profilelement 8 und damit für die erste Anströmungsrichtung 28 saugseitig liegt. Entsprechend werden die zweite Kanalverschlusselemente 10.1, 10.2 aufgrund der fluidischen Kupplung über den zweiten Kopplungskanal 12 eingefahren und gegen den zweiten außermittigen Strömungskanal 6 frei. Für die nicht dargestellte zweite Strömungsrichtung 29 liegt das erste elastische Profilelement 8 saugseitig und das zweite elastische Profilelement 11 druckseitig, wodurch die ersten Kanalverschlusselemente 7.1, 7.2 den ersten außermittigen Überströmkanal 5 freigeben und die zweiten Kanalverschlusselemente 10.1, 10.2 den zweiten außermittigen Überströmkanal 6 schließen.

In Figur 3b wird eine Draufsicht auf ein Turbinenblatt 13 mit einem Profil gemäß Figur 3a gezeigt. Es ist ersichtlich, dass die ersten elastischen Profilelemente 8, 8.1, ..., 8.n, die jeweils einem erstem außermittigen Überströmkanal 5, 5.1, ..., 5.n zugeordnet sind, eine begrenzte Erstreckung in Turbinenblatt-Längsrichtung aufweisen, um eine Verfrachtung des Arbeitsmediums unter Fliehkraftwirkung zu vermeiden.

Durch die von den Strömungskräften bewirkte Verformung der elastischen Profilelemente 8, 8.1, 8.n, 11 erfolgte eine adaptive Anpassung des Profils in Abhängigkeit der Anströmungsrichtung. Hierunter wird eine durch Verformung des Profils bewirkte Brechung der Punktsymmetrie verstanden, wobei sich beim Wechsel der Anströmungsrichtung die Verformungsrichtung umkehrt.

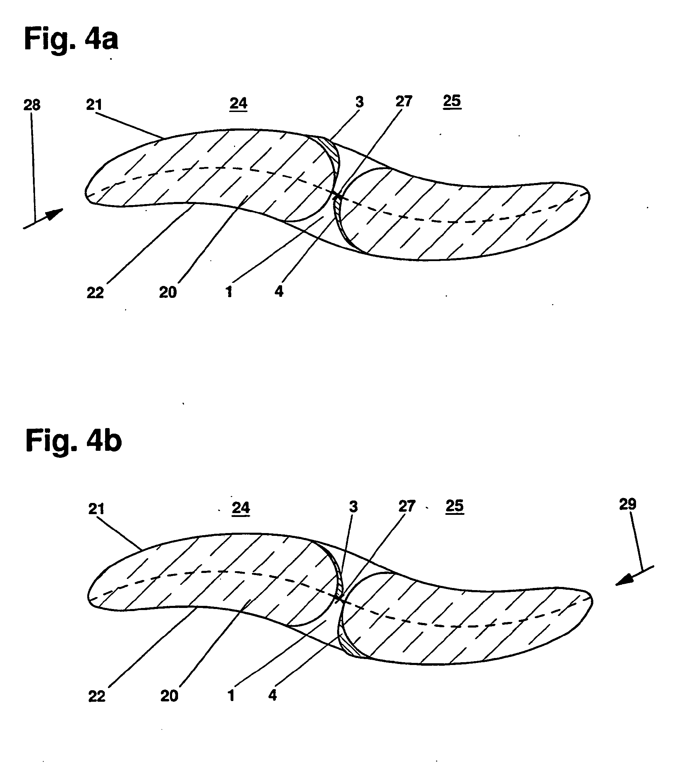

Figuren 4a und 4b zeigen eine weitere Ausgestaltungsalternative welche nicht Teil der Erfindung ist, für die ein erstes adaptives Wandungselement 3 und ein zweites adaptives Wandungselement 4 für eine Weitergestaltung einer Figur 1a entsprechenden Überströmvorrichtung 1 vorgesehen sind. Dabei ist das erste adaptive Wandungselement 3 in jenem Teil der Überströmvorrichtung 1 angeordnet, der der ersten Profilhälfte 24 auf der ersten Profilseite 21 zugeordnet ist. Hierzu punktsymmetrisch zum Symmetriepunkt 27 liegt das zweite adaptive Wandungselement 4, das der zweiten Profilhälfte 25 auf der zweiten Profilseite 22 zugeordnet ist.

In den Figuren 4a und 4b ist die passive Einstellung der Kontur des ersten und des zweiten adaptiven Wandungselements 3, 4 gezeigt, die als elastische Komponenten ausgebildet sind oder eine strömungsfähige oder komprimierbare Füllung aufweisen. Aufgrund der Deformation der adaptiven Wandungselemente 3, 4 entsteht bei einer Anströmung auf das Profil eine Symmetriebrechung der Kontur der Überströmvorrichtung 1, die eine Verbesserung der Strömungsführung in der Überströmvorrichtung 1 bewirkt. Die Grundkontur des Profils, d.h. der Zustand ohne Anströmung, ist jedoch unverändert punktsymmetrisch zum Symmetriepunkt 27.

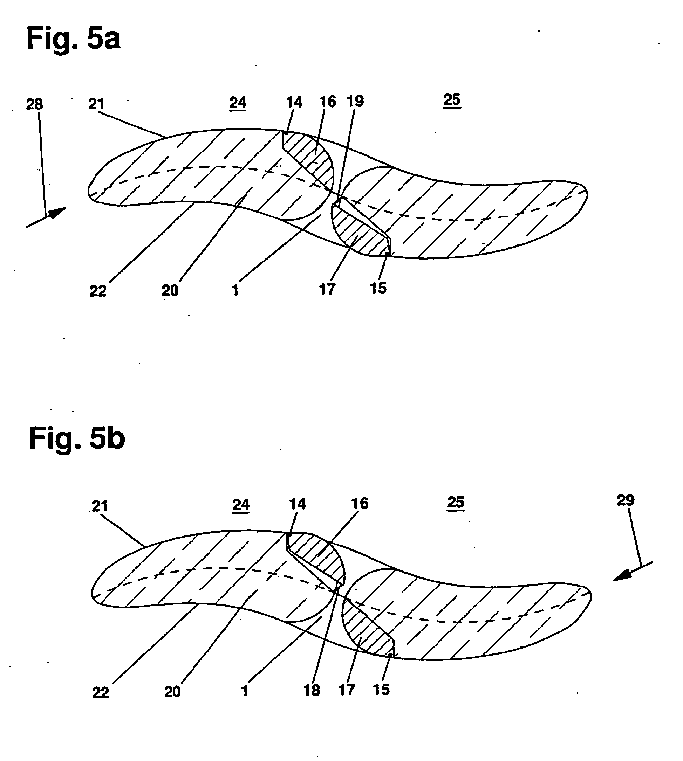

In den Figuren 5a und 5b ist eine Ausgestaltungsalternative mit einem ersten aktiven, adaptiven Wandungselement 16 und einem zweiten aktiven, adaptiven Wandungselement 17 gezeigt. Dabei ist das erste aktive, adaptive Wandungselement 16 der ersten Profilhälfte 24 der ersten Profilseite 21 zugeordnet und das zweite aktive, adaptive Wandungselement 17 ist Teil der zweiten Profilhälfte 25 auf der zweiten Profilseite 22. Zur Ausführung Drehbewegung um einen ersten Drehpunkt 14, der nahe des äußeren Rands der Überströmvorrichtung 1 liegt, ist dem ersten adaptiven Wandungselemente 16 ein erster Aktor 18 zugeordnet, der beispielsweise einen Hydraulikzylinder umfassen kann. Für kleine Stellbewegungen können als Aktoren 18 auch Piezoelemente verwendet werden. Entsprechend sind dem zweiten adaptiven Wandungselemente 17 ein zweiter Aktor 19 und ein zweiter Drehpunkt 15 zugeordnet.

Für die in Figur 5a dargestellte, erste Anströmungsrichtung 28 wird das zweite aktive, adaptive Wandungselement 17 ausgefahren und korrigiert die Gesamtkontur der zweiten Profilhälfte 25. Das erste aktive, adaptive Wandungselement 16 verbleibt im eingefahrenen Zustand. Bei einem Wechsel der Anströmung zur zweiten Anströmungsrichtung 29 wird entsprechend das erste aktive, adaptive Wandungselement 16 ausgefahren und korrigiert den zugehörigen Profilbereich. Auf der Saugseite wird das zweite aktive, adaptive Wandungselement 17 im ursprünglichen Zustand verbleiben. Diese Situation ist in Figur 5b dargestellt.

Die Ausführungsform gemäß der Figuren 5a und 5b verwendet aktiv nachgeführte adaptive Elemente im Bereich der erfindungsgemäßen Überströmvorrichtung 1, wobei gegenüber einem rein passiven System ein erhöhter apparativer Aufwand für die Ansteuerung notwendig ist. Gegenüber den bisher angewandten, aktiven Vorrichtungen zur Anpassung an einen Anströmungsrichtungswechsel mittels einer Volldrehung des Turbinenblatts 13 durch eine an der Schnittstelle zur Nabe angebrachte Pitch-Verstellvorrichtung ergibt sich der Vorteil, dass durch eine Vielzahl von separat schaltbaren, adaptiven Elementen eine Anströmungsrichtungs-Anpassung der Profilkontur bewirkt werden kann, für die Strömungskräfte auf mehrere Einzelkomponenten verteilbar sind. Außerdem führt der Ausfall einzelner adaptiver Elemente nicht zu einem kompletten Funktionsverlust des Turbinenblatts 13.

Weitere Ausgestaltungen der Erfindung sind denkbar. So kann beispielsweise innerhalb des Profils eine Kanalstruktur mit einer Eintrittsöffnung im Bereich einer Profilnase angelegt werden, die Strömungsanteile längs der Skelettlinie innerhalb des Profils bis zu einer Austrittsöffnung im Bereich eines abstrom- und saugseitig liegenden Profilabschnitts verlagert. Weitere Ausgestaltungsvarianten ergeben sich aus dem anschließenden Schutzansprüchen.

### Bezugszeichenliste

- 1: Überströmvorrichtung
- 2, 2.1, 2.2, 2.m: Überströmkanal
- 3: erstes adaptives Wandungselement
- 4: zweites adaptives Wandungselement
- 5, 5.1, ..., 5.n: erster außermittiger Überströmkanal
- 6, 6.1, ..., 6.n: zweiter außermittiger Überströmkanal
- 7.1, 7.2: erstes Kanalverschlusselement
- 8, 8.1, ..., 8.n: erstes elastisches Profilelement
- 9: erster Kopplungskanal
- 10.1, 10.2: zweites Kanalverschlusselement
- 11: zweites elastisches Profilelement
- 12: zweiter Kopplungskanal
- 13: Turbinenblatt
- 14: erster Drehpunkt
- 15: zweiter Drehpunkt
- 16: erstes aktives, adaptives Wandungselement
- 17: zweites aktives, adaptives Wandungselement
- 18: erster Aktor
- 19: zweiter Aktor
- 20: Profilsehne
- 21: erste Profilseite
- 22: zweite Profilseite
- 23: Mittenlinie
- 24: erste Profilhälfte
- 25: zweite Profilhälfte
- 26: Mittelbereich
- 27: Symmetriepunkt
- 28: erste Anströmungsrichtung
- 29: zweite Anströmungsrichtung
- 30: erste Profilnase
- 31: zweite Profilnase
- 32: Skelettlinie

- w: Wölbung

## Patentansprüche

1. Turbinenblatt für eine Wasserturbine, das wenigstens in einem Teilbereich seiner Längserstreckung ein gewölbtes Profil mit einer Skelettlinie (32) aufweist, die punktsymmetrisch zu einem, bei halber Profiltiefe auf der Profilsehne (20) liegenden Symmetriepunkt (27) ausgebildet ist und einen S-Schlag ausführt, wobei die Skelettlinie (32) das Profil in eine erste Profilseite (21) und eine zweite Profilseite (22) aufteilt; und
wobei das Profil eine Mittenlinie (23) umfasst, die eine Lotrechte auf der Profilsehne (20) mit dem Symmetriepunkt (27) als Fußpunkt darstellt und die das Profil in eine erste Profilhälfte (24) und in eine zweite Profilhälfte (25) aufteilt;
**dadurch gekennzeichnet, dass**
das Turbinenblatt eine Überströmvorrichtung (1) umfasst, die eine fluidische Verbindung zwischen der ersten Profilseite (21) und der zweiten Profilseite (22) herstellt, wobei die Überströmvorrichtung (1) einen ersten außermittigen Überströmkanal (5, 5.1, .., 5.n), der eine fluidische Verbindung zwischen der ersten Profilseite (21) und der zweiten Profilseite (22) In der ersten Profilhälfte (24) herstellt, und einen zweiten außermittigen Überströmkanal (6, 6.1, ..., 6.n), der eine fluidische Verbindung zwischen der ersten Profilseite (21) und der zweiten Profilseite (22) in der zweiten Profilhälfte (25) herstellt, umfasst; und
dem ersten außermittigen Überströmkanal (5, 5.1, ..., 5.n) ein erstes Kanalverschlusselement (7.1, 7.2) und dem zweiten außermittigen Überströmkanal (6, 6.1, ..., 6.n) ein zweites Kanalverschlusselement (10.1, 10.2) zugeordnet sind, die für den selektiven Verschluss des jeweiligen außermittigen Überströmkanals in Abhängigkeit der Anströmungsrichtung ausgelegt sind.

2. Turbinenblatt nach Anspruch 1, **dadurch gekennzeichnet, dass** das selektive Verschließen des ersten außermittigen Überströmkanals (5, 5.1, ..., 5.n) und des zweiten außermittigen Überströmkanals (6, 6.1, ..., 6.n) passiv bewirkt wird.

3. Turbinenblatt nach Anspruch 2, **dadurch gekennzeichnet dass** zur passiven Ansteuerung des ersten Kanalverschlusselements (7, 7.1, 7.2) ein erstes elastisches Profilelement (8, 8.1, ..., 8.n) auf der zweiten Profilseite (22) und zur passiven Ansteuerung des zweiten Kanalverschlusselements (10.1, 10.2) ein zweites elastisches Profilelement (11) auf der ersten Profilseite (21) verwendet wird.

4. Turbinenblatt nach einem der vorausgehenden Ansprüche, **dadurch gekennzeichnet, dass** die Überströmvorrichtung (1) ein erstes adaptives Wandungselement (3) und ein zweites adaptives Wandungselement (4), die symmetrisch zum Symmetriepunkt (27) angeordnet sind, umfasst.

5. Turbinenblatt nach Anspruch 4, **dadurch gekennzeichnet, dass** das erste adaptive Wandungselement (3) und das zweite adaptive Wandungselement (4) als passive Elemente wirken, deren Kontur von den Strömungskräften beeinflusst wird.

6. Turbinenblatt nach Anspruch 4, **dadurch gekennzeichnet, dass** das erste adaptive Wandungselement (3) ein erstes aktives, adaptives Wandungselement (16) umfasst und das zweite adaptive Wandungselement (4) ein zweites aktives, adaptives Wandungselement (17) umfasst.

7. Verfahren zum Betrieb eines Turbinenblatts für eine bidirektional anströmbare Wasserturbine, das wenigstens in einem Teilbereich seiner Längserstreckung ein gewölbtes Profil mit einer Skelettlinie (32) aufweist, die punktsymmetrisch zu einem, bei halber Profiltiefe auf der Profilsehne (20) liegenden Symmetriepunkt (27) ausgebildet ist und einen S-Schlag ausführt, wobei die Skelettlinie (32) das Profil in eine erste Profilseite (21) und eine zweite Profilseite (22) aufteilt; und
wobei das Profil eine Mittellinie (23) umfasst, die eine letrechte auf der Profilsehne (20) mite dem Symmetriepunkt (27) als Tußpunkt darstellt und die das Profil in eine erste Profilhälfte (24) und in eine inierte Profilhälfte (25) aufteilt,
das Turbinenblatt eine Überströmvorrichtung (1) umfasst die eine fluidische Verbindung zwischen der ersten Profilseite (21) und der zweiten Profilseite (22) herstellt, wobei die Überströmvorrichtung (1) einen ersten außermittigen Überströmkanal (5, 5.1, .., 5.n), der eine fluidische Verbindung zwischen der ersten Profilseite (21) und der zweiten Profilseite (22) in der ersten Profilhälfte (24) herstellt, und einen zweiten außermittigen Überströmkanal (6, 6.1,..., 6.n), der eine fluidische Verbindung zwischen der ersten Profilseite (21) und der zweiten Profilseite (22) in der zweiten Profilhälfte (24) herstellt, umfasst; und wobei der erste außermittige Überströmkanal (5, 5.1, ..., 5.n) ein erstes Kanalverschlusselement (7.1, 7.2) und der zweite außermittige Überströmkanal (6, 6.1, ..., 6.n) ein zweites Kanalverschlusselement (10.1, 10.2) umfassen; und
wobei durch das jeweils zugeordnete Kanalverschlusselement in Abhängigkeit der Anströmungsrichtung der stromaufwärts liegende außermittige Überströmkanal geschlossen und der stromabwärts liegende außermittige Überströmkanal geöffnet wird.

## Claims

1. A turbine blade for a water turbine, which contains at least in a partial region of its longitudinal extension a domed profile with a skeleton line (32), which is designed point-symmetrically with respect to symmetry point (27) resting on the chord (20) with half a profile depth and carried out an S-shaped stroke, wherein the skeleton line (32) divides the profile into a first profile side (21) and a second profile side (22); and wherein the profile contains a central line (23), which represents a plumb line on the chord (20) with the symmetry point (27) as a root point and which divides the profile into a first profile half (24) and into a second profile half (25);
**characterised in that**
the turbine blade contains an overcurrent device (1), which creates a fluid connection between the first profile side (21) and the second profile side (22), wherein the overflow device (1) contains a first eccentric overflow channel (5,5.1, .., 5.n), which creates a fluid connection between the first profile side (21) and the second profile side (22) in the first profile half (24), and a second eccentric overflow channel (6.1, ..., 6.n), which creates a fluid connection between the first profile side (21) and the second profile side (22) in the second profile half (25); and a first channel closure element (7.1, 7.2) is allocated to the first eccentric overflow channel (5, 5.1, ..., 5.n) and a second channel closure element (10.1, 10.2) is allocated to the second eccentric overflow channel (6, 6.1,..., 6.n), which are designed for the selective closure of the respective eccentric overflow channel in relation to the inflow direction.

2. The turbine blade according to claim 1, **characterised in that** the selective closing of the first eccentric overflow channel (5, 5.1, ..., 5.n) and the selective closing of the second eccentric overflow channel (6, 6.1, ..., 6.n) are controlled passively.

3. The turbine blade according to claim 2, **characterised in that** to provide passive control of the first channel closure element (7, 7.1, 7.2) a first elastic profile element (8, 8.1,..., 8.n) is used on the second profile side (22) and to provide passive control of the second channel closure element (10, 10.1, 10.2) a second elastic profile element (11) is used on the second profile side (22).

4. The turbine blade according to one of the previous claims, **characterised in that** the overflow device (1) contains a first adaptive partition element (3) and a second adaptive partition element (4), which are arranged symmetrically to the symmetry point (27).

5. The turbine blade according to claim 4, **characterised in that** the first adaptive partition element (3) and the second adaptive partition element (4) act as passive elements, whose contour is influenced by the flow induced forces.

6. The turbine blade according to claim 4, **characterised in that** the first adaptive partition element (3) contains a first active, adaptive partition element (16) and that the second adaptive partition element (4) contains a second active, adaptive partition element (17).

7. A method for operating a turbine blade for a water turbine with a bidirectional fluid flow, which contains at least in a partial region of its longitudinal extension a domed profile with a skeleton line (32), which is designed point-symmetrically with respect to symmetry point (27) resting on the chord (20) with half a profile depth and carried out an S-shaped stroke, wherein the skeleton line (32) divides the profile into a first profile side (21) and a second profile side (22); and wherein the profile contains a central line (23), which represents a plumb line on the chord (20) with the symmetry point (27) as a root point and which divides the profile into a first profile half (24) and into a second profile half (25), the turbine blade contains an overflow device (1), which creates a fluid connection between the first profile side (21) and the second profile side (22), wherein the overflow device (5) contains a first eccentric overflow channel (5.1, ..., 5.n), which creates a fluid connection between the first profile side (21) and the second profile side (22) in the first profile half (24), and a second eccentric overflow channel (6.1, .., 6.n), which creates a fluid connection between the first profile side (21) and the second profile side (22) in the second profile half (24); and wherein the first eccentric overflow channel (5, 5.1, ..., 5.n) includes a first channel closure element (7.1, 7.2) and the second eccentric overflow channel (6, 6.1,..., 6.n) includes a second channel closure element (10.1, 10.2); and
wherein under the effect of the respectively allocated channel closure element according to the inflow direction the eccentric overflow channel situated upstream is closed and the eccentric overflow channel situated downstream is closed.

## Revendications

1. Pale de turbine pour turbine à eau, comprenant au moins dans une zone partielle de son extension longitudinale un profil vouté avec une ligne d'ossature (32) conçue en symétrie point par rapport à un point de symétrie (27) situé sur la corde de profil (20) à mi-profondeur du profil et dont la course est en forme de S, où la ligne d'ossature (32) divise le profil en un premier côté de profil (21) et un second côté de profil (22) ; et où le profil renferme une ligne médiane (23), qui représente une verticale sur la corde de profil (20) avec le point de symétrie (27) en tant que point de pied et qui divise le profil en une première moitié de profil (24) et en une seconde moitié de profil (25) ;
caractérisée en ce
la pale de turbine contient un dispositif de débordement (1), créant une liaison fluide entre le premier côté de profil (21) et le second côté de profil (22), où le dispositif de débordement (1) contient un premier canal de débordement excentrique (5, 5.1, .., 5.n) créant une liaison fluide entre le premier côté de profil (21) et le second côté de profil (22) dans la première moitié de profil (24) et contient un second canal de débordement excentrique (6, 6.1, .., 6.n) créant une liaison fluide entre le premier côté de profil (21) et le second côté de profil (22) dans la seconde moitié de profil (25) ; tandis qu'un premier élément de fermeture de canal (7.1, 7.2) est affecté au premier canal de débordement excentrique (5, 5.1, ..., 5.n) et qu'un second élément de fermeture de canal (10.1, 10.2) est affecté au second canal de débordement excentrique (6, 6.1, ..., 6.n), éléments conçus pour la fermeture sélective du canal de débordement excentrique respectif en fonction de la direction d'écoulement.

2. Pale de turbine selon la revendication 1, **caractérisée en ce que** la fermeture sélective du premier canal de débordement excentrique (5, 5.1, ..., 5.n) et la fermeture sélective du second canal de débordement excentrique (6, 6.1, ..., 6.n) sont à commande passive.

3. Pale de turbine selon la revendication 2, **caractérisée en ce que** l'on utilise pour la commande passive du premier élément de fermeture de canal (7, 7.1, 7.2) un premier élément de profil élastique (8, 8.1, ..., 8.n) sur le premier côté de profil (22) et que l'on utilise pour la commande passive du second élément de fermeture de canal (10.1, 10.2) un second élément de profil élastique (11) sur le premier côté de profil (21).

4. Pale de turbine selon l'une quelconque des revendications précédentes, **caractérisée en ce que** le dispositif de débordement (1) contient un premier élément de séparation adaptatif (2) et un second élément de séparation adaptatif (4), aménagés de manière symétrique par rapport au point de symétrie (27).

5. Pale de turbine selon la revendication 4, **caractérisée en ce que** le premier élément de séparation adaptatif (3) et le second élément de séparation adaptatif (4) fonctionnent comme éléments passifs, dont le contour est influencé par les forces d'écoulement.

6. Pale de turbine selon la revendication 4, **caractérisée en ce que** le premier élément de séparation adaptatif (3) contient un premier élément de séparation adaptatif actif (16) et que le second élément de séparation adaptatif (4) contient un second élément de séparation adaptatif actif (17).

7. Procédé d'exploitation d'une pale de turbine pour turbine à eau exposée à un écoulement bidirectionnel, comprenant au moins dans une zone partielle de son extension longitudinale un profil vouté avec une ligne d'ossature (32), conçue en symétrie point par rapport à un point de symétrie (27) situé sur la corde de profil (20) à mi-profondeur du profil et dont la course est en forme de S, où la ligne d'ossature (32) divise le profil en un premier côté de profil (21) et un second côté de profil (22) ; et où le profil renferme une ligne médiane (23), qui représente une verticale sur la corde de profil (20) avec le point de symétrie (27) en tant que point de pied et qui divise le profil en une première moitié de profil (24) et en une seconde moitié de profil (25), la pale de turbine contient un dispositif de débordement (1), créant une liaison fluide entre le premier côté de profil (21) et le second côté de profil (22), où le dispositif de débordement (1) contient un premier canal de débordement excentrique (5, 5.1, .., 5.n) créant une liaison fluide entre le premier côté de profil (21) et le second côté de profil (22) dans la première moitié de profil (24) et contient un second canal de débordement excentrique (6, 6.1, .., 6.n) créant une liaison fluide entre le premier côté de profil (21) et le second côté de profil (22) dans la seconde moitié de profil (24) ; et où le premier canal de débordement excentrique (5, 5.1, ..., 5.n) renferme un premier élément de fermeture de canal (7.1, 7.2) et que le second canal de débordement excentrique (6, 6.1, ..., 6.n) renferme un second élément de fermeture de canal (10.1, 10.2); et
où en fonction de la direction d'écoulement, le canal de débordement excentrique situé en amont se referme et le canal de débordement excentrique situé en aval s'ouvre sous l'effet de l'élément de fermeture de canal affecté à chacun d'eux.
